# EUROPEAN PATENT APPLICATION

(11) **EP 1 452 992 A2**
(43) Date of publication of application: **01.09.2004**
(21) Application number: 04251142.8
(22) Date of filing: 27.02.2004
(51) Int. Cl.: G06F 17/60

(54) **Engine induction booking system**

(30) Priority: 28.02.2003 US 375966
(71) Applicant: UNITED TECHNOLOGIES CORPORATION, Hartford, CT 06101 (US)
(72) Inventor: Patel, Ajay, Rocky Hill Connecticut 06067 (US); Ryan, Daniel J., Longmeadow Massachusetts 01106 (US); Willis, Hoyt L., Westfield Massachusetts 01085 (US); Soltesz, Frank A., Meriden Connecticut 06451 (US)
(74) Representative: Leckey, David H.

(57) **Abstract**

A method for scheduling an operation comprises the steps of providing a schedule of available time slots, submitting a reservation, the reservation identifying a plurality of the time slots suitable for the operation, and providing a notification, the notification either declining the reservation or accepting the reservation at one of the plurality of time slots identified in the submitting step.

## Description

### BACKGROUND OF THE INVENTION

### (1) Field of the Invention

The present invention relates to a computer-assisted method of scheduling an operation. More specifically, the present invention relates to a web-based methodology for collecting and disseminating information related to the overhaul and repair of engines and modules.

### (2) Description of Related Art

Scheduling and booking of overhaul and repair operations for items such as made-to-order parts involves the interaction of sales personnel, facility managers, operations technicians and the like. Most often, these various entities are not in communication with one another. The inability of the parties to exchange pertinent information instantaneously and seamlessly amongst themselves makes the process of scheduling operations time consuming, inefficient, and error prone.

What is therefore needed is a web-based system for booking and analyzing overhaul and repair operations linked to a common data repository from which interested parties may view information, book service and orders, confirm bookings, and manage operations.

### SUMMARY OF THE INVENTION

Accordingly, it is an object of the present invention to provide a computer-assisted method of scheduling an operation.

In accordance with the present invention, a method for scheduling an operation comprises the steps of providing a schedule of available time slots, submitting a reservation, the reservation identifying a plurality of the time slots suitable for the operation, and providing a notification, the notification either declining the reservation or accepting the reservation at one of the plurality of time slots identified in the submitting step.

In accordance with the present invention, a method for maintaining a schedule comprises the steps of providing a schedule of time slots and a status of the time slots, wherein the status is selected from the group consisting of booked, reserved, and open, accepting a reservation for an operation, the reservation identifying a plurality of the time slots having a reserved or open status, and adjusting a status of the time slots identified in the accepting step.

In accordance with the present invention, an apparatus for performing computer assisted maintenance of a schedule comprises means for providing a schedule of time slots and a status of the time slots, wherein the status is selected from the group consisting of booked, reserved, and open, means for accepting a reservation for an operation, the reservation identifying a plurality of the time slots having a reserved or open status, and means for adjusting a status of the time slots identified in the accepting step.

### BRIEF DESCRIPTION OF THE DRAWINGS

- FIG. 1: A diagram of the Slotting Plan of the present invention.
- FIG. 2: A diagram of the request detail window of the present invention.
- FIG. 3: A diagram of the Skyline of the present invention.
- FIG. 4: A diagram of the Master Schedule window of the present invention.
- FIG. 5: A diagram of the Production to Sales Plan of the present invention.
- FIG. 6: A diagram of the Executive Summary of the present invention.
- FIG. 7: A diagram of the components of the EIBS of the present invention.

### DETAILED DESCRIPTION OF THE PREFERRED EMBODIMENT(S)

It is a central purpose of the present invention to provide a web-based system for booking and analyzing overhaul and repair operations. While described with reference to an Engine Induction & Booking System 2, or "EIBS", the present invention is drawn broadly to encompass any form of booking system for items, specifically made-to-order parts such as engines. The EIBS of the present invention is comprised of five major components, specifically: a Slotting Plan Calendar, a Skyline, a Master Schedule, a Production to Sales Report, and an Executive Summary.

These five major components are integrated to give a standard structure to a production environment that has many variables. The basic operation of the EIBS may be summarized as follows. Sales people in the field view what slots are available in operations and place requests to build a forecast for planning and operations to review. All such interactions are preferably performed in a web based environment wherein data populating displayed web pages of the EIBS is stored on a central data repository 10. The review takes place by utilizing the Slotting Plan Calendar and the Skyline, both of which show how the slots are being requested relative to inductions required. The Skyline represents by year, on a month by month basis, the planned inputs to an entity's operations. The Skyline is linked to the Master Production Schedule (MPS) and once a requirement is received, the Skyline reflects that receipt and in turn, so does the Master Production Schedule (MPS).

The product is then built or serviced and the MPS is updated showing where an item is relative to various gates in the process. As items are updated in the MPS, the Production to Sales Report is updated in real time, showing a user of the EIBS how operations is doing relative to the Sales Plan by various pre-defined categories. The Executive Summary is then updated to give the user a quick reference to delivery status and next months projected inputs to date.

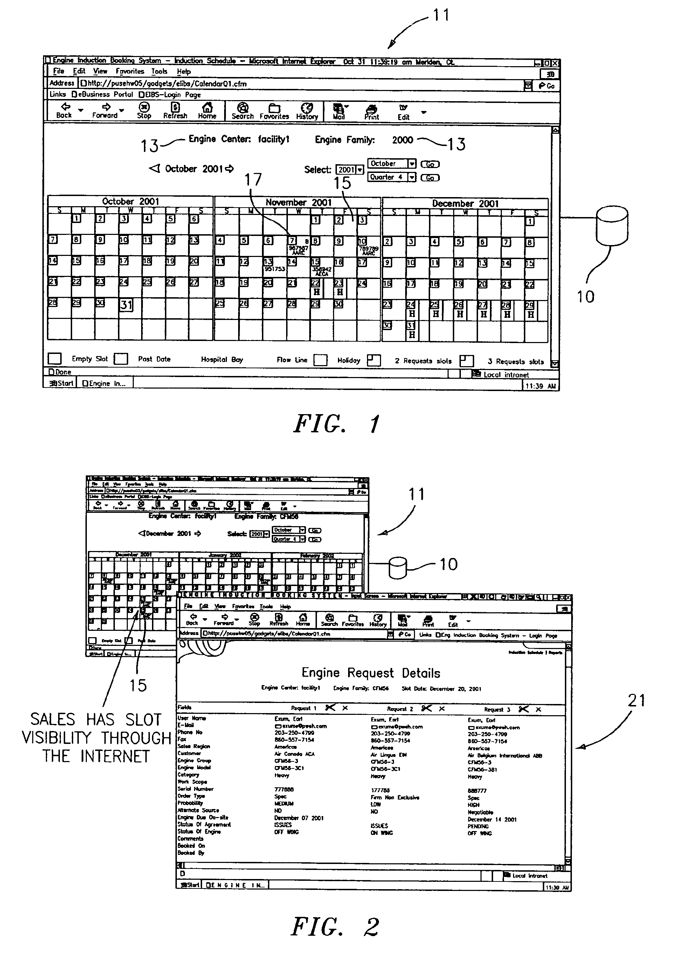

With reference to Fig. 1, there is illustrated a Slotting Plan Calendar 11 of the present invention. Users, preferably sales people in the field, utilizing a PC access the web based Slotting Plan 11. Slotting Plan 11 is in calendar format indicating open slots. As used herein, an "open slot" refers a day upon which a product, preferably an engine, may be serviced. Preferably, the calendar of the Slotting Plan 11 extends for twelve months. In a preferred embodiment, three contiguous months are displayed at one time selectable by the user.

Slotting Plan 11 may be additionally defined by subcategories 13 such as Engine Center and Product Family (i.e.: PW4000 engines). The EIBS of the present invention may further present separate Slotting Plans 11 for engines and modules (different types of production) with the capability to designate various shop visit categories. Data displayed in the slots 15 of Slotting Plan 11 is retrieved from central data repository 10.

In operation, a user or requestor clicks on a slot on the Slotting Plan 11 to request a slot. Users input online information relevant to the service being requested.
Preferably, contact and region information are auto populated from a user profile which can be accessed by the EIBS, preferably from central data repository 10. In addition, specifics regarding the product being requested for overhaul and contractual information are entered via a windowed environment.

Individual slots 15 displayed on Slotting Plan 11 are visually coded to indicate the status of the slots 15. In the present example, a box 17 indicating the date of the slot 15 is color coded or otherwise visually altered to indicate the number of scheduling requests, or requirements, entered for the slot 15. In the present example, up to three requirements can be input into an open slot with one requirement proceeding to booking via the Master Planners, as discussed below. Similarly, up to seven module requests may be entered, with the Master Planner booking up to four modules per slot 15. Additional visual cues can identify a slot 15 as open, tentatively booked, reserved, and booked.

In addition to booking a slot 15, a user may click on or otherwise select a slot 15 to view the pending requests for the slot 15. With reference to Figure 2, there is illustrated a request detail window 21 of the present invention. Request detail window 21 displays information related to the scheduling requests made for the selected slot 15. In a preferred embodiment, complete information is displayed only for scheduling requests to which the user has security access. For reasons of privacy, scheduling requests to which the user has not been granted access may be displayed in an abbreviated form.

The information collected via Open, Tentative, and Reserved slots are collected as an entity for Sales & Operational review, at which time their status will be reviewed and changed accordingly. The decision to change the status for a slot request is made by the Master Planners considering several factors such as probability of receiving the engine or module by the required date, execution of the contract, engine center capacity, etc. Considering these factors the Master Planners will review the data on a daily or as required basis to decide whether to book the slot, reject the request for the slot (in which case the record will be moved to Backlog), move the request to another slot, offload the engine or module to an internal or external engine center, or delete the request if the customer decides to recall the request. The change in status of the records is displayed on the skyline chart and recorded in the system. The requestor will receive final notification via e-mail and can also check the request status on-line.

Once the product arrives at an Engine Center, the appropriate person will receive and eventually induct the engine by utilizing the same system. Engines arriving without being in the database will be input as status pending and an e-mail will be automatically sent to the appropriate person in Master Planning and Sales.

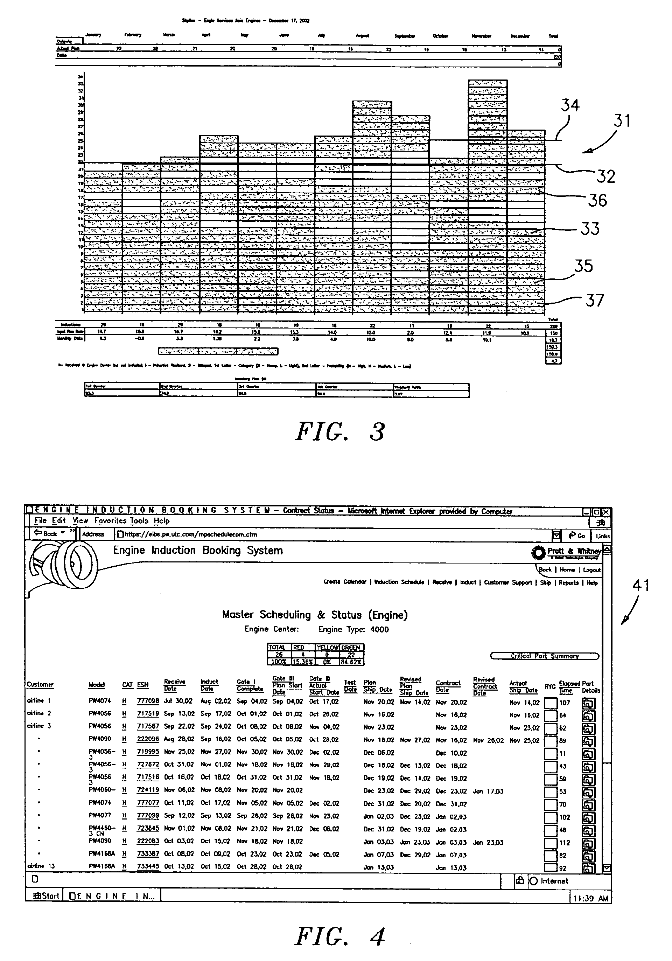

With reference to Figure 3, there is illustrated the Skyline 31 of the present invention. Skyline 31 summarizes inputs to the EIBS and is built from bookings into the Slotting Plan 11 retrieved from central repository 10. In addition, Skyline 31 provides analytical capability for viewing forecasted input, and output to the EIBS. The bookings are linked to the quarterly plans at the overhaul category level (1 - 10).
Skyline 31 displays a twelve month view of bookings sorted by type of visit or category, the probability 33 of each action taking place as scheduled, and displays the customer code 35, and current status 37 (received, inducted, shipped) and updates this displayed information as changes take place.

Preferably, Skylines 31 are built by facilities (engine centers) and represented on a monthly basis and are viewed by calendar year. Different models are represented by unique color codes. Preferably, an induction line 32 indicating inputs required to meet future output requirements and a capacity line 34 indicating surge potential are overlayed on Skyline 31.

The skyline is stacked by engine model and type of shop visit (heavy & light). A sales input (induction) line 32 caps the requirements for the month based on the outputs backed off of "X" amount of months. This input line then represents what is required to meet output plan.

The surge line 34 represents additional buffer capacity for inductions in the facility. These items would be placed above the sales input line.

The runrate line indicates what the engine center needs to induct in that month to achieve the year end sales plan. It is currently calculated by taking the total induction requirements, subtracting the actual inductions and dividing by the remaining months in the year. This line is then placed at the required level. It does adjust up and down based on the way inductions are going.

In this manner, a real time, worldwide visibility of a 12 month snapshot of forecast (preferably shown by defined probability - high, low, neutral) and booking status at a particular engine center is enabled. In addition, there is provided the ability to click on a Skyline requirement 36 and retrieve data pertinent to that particular item. Linkage to the Slotting Plans 10 information stored on central data repository 10 allows for the display on Skyline 31 of shop capacity as slots are firmed. Linkage of the Skyline 31 to the Master Schedule 41, described below, enables the Skyline 31 to display updated information as requirements are received, inducted, and shipped. In addition, there is provided linkage from Skyline 31 to the Production to Sales Plan 51 described below.

With reference to Figure 4, there is illustrated the Master Schedule 41 of the present invention. Master Schedule 41 is linked to central data repository 10. The Master Schedule 41 is built to represent what an overhaul shop expects to manufacture. The Master Planners maintain the Master Schedule 41 for all engine centers providing the numbers that drive demand planning. Master Planners provide human input and decision making capability to the EIBS. The schedule identifies what the planners plan to overhaul, represented by different models (configuration), category codes, quantity, and dates.
Preferably included in the Master Schedule 41 is the following: Customer Name, Model, Category Code, Serial Number, Receipt & Induct Dates, Gating Dates (representing milestones), Test Dates, Ship & Contract Dates, Color Code Status (Red, Yellow, Green), Elapsed Time, Links to Critical Parts & Issues, Links to the Skyline 31, Links to the Production to Sales Report & Executive Summary, and Links to SAP.

As updates are made to the Master Schedule 41 and the updated data stored in central data repository 10, several real time linkages occur. Skyline 31 is updated to show received, inducted, and shipped items. The Production to Sales Report, described below, is updated to show current schedule status.
The Executive Summary, described below, is updated to show current month status and next month receipts. Automated e-Mail messages are generated to provide daily delivery updates to users.

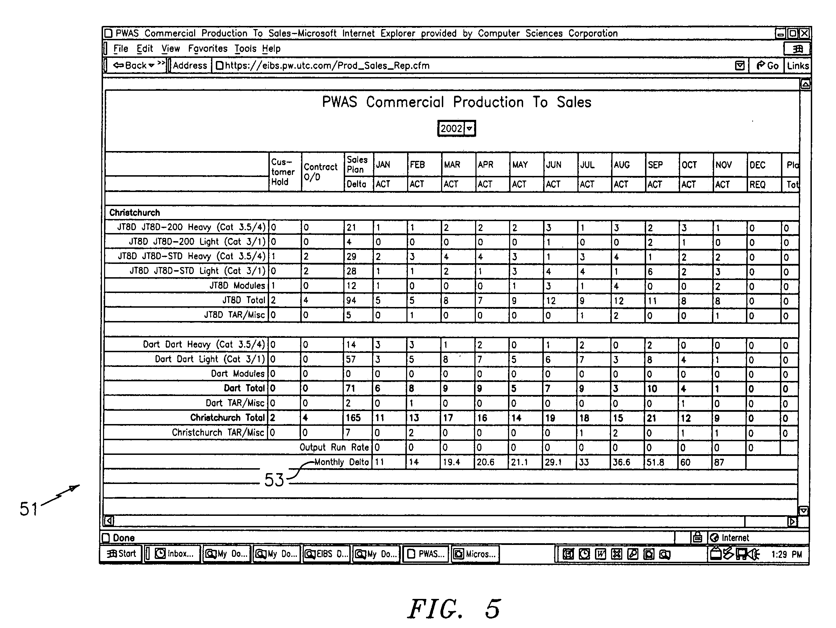

With reference to Figure 5, there is illustrated the Production to Sales Report 51 of the present invention. The Production to Sales Report represents output and is designed to complement the Master Production Schedule 41. Production to Sales Report 51 provides year to date (monthly) comparison of Production deliveries to the Sales Plan. Production to Sales Report 51 tracks heavy, light, and module requirements by engine family for each engine center. Production to Sales Report 51 highlights both requirements "on hold" and requirements overdue to contract. A delta 53 to plan is calculated for each engine center plus a grand total for an overhaul business. Lastly, monthly run rates are calculated to identify production levels required to achieve plan.

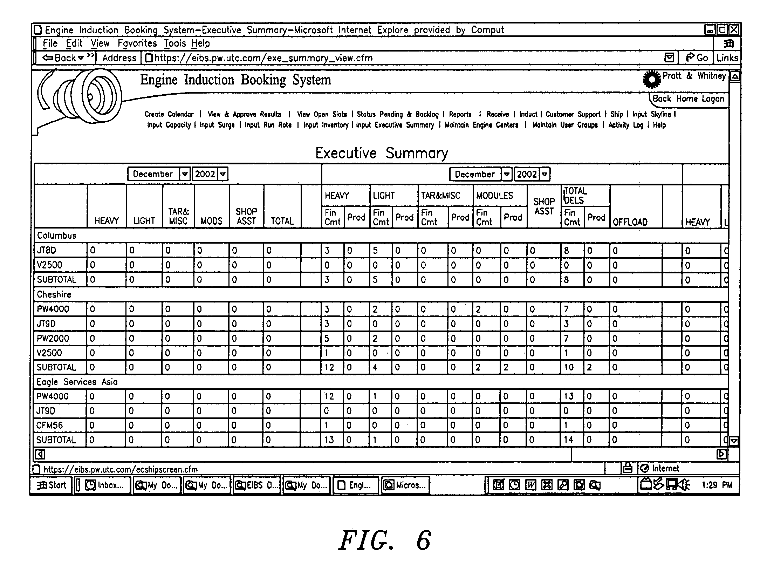

With reference to Fig. 6, there is illustrated the Executive Summary 61 of the present invention. Preferably, Executive Summary 61 is a three-month (previous month, current month, and next month) view of production. Executive Summary 61 provides a comparison of "financial commits" (those items the engine center has committed for financial planning purposes) to items loaded into production. Executive Summary 61 identifies heavy, light, module, and miscellaneous requirements by model for each engine center retrieved from central data repository 10. Offload requirements can also be tracked and totals are derived for both engine center and total aftermarket requirements. Real time linkage to the Master Production Schedule 41 is provided for updates.

In addition to the aforementioned operation of the EIBS of the present invention, the following functionality is performed. A Production Package is produced once a week for the weekly operations review. The system utilizes a predefined cut-off and produces a package for worldwide distribution incorporating the key components already identified plus other the ability to review critical parts, track user activity, and review reports.

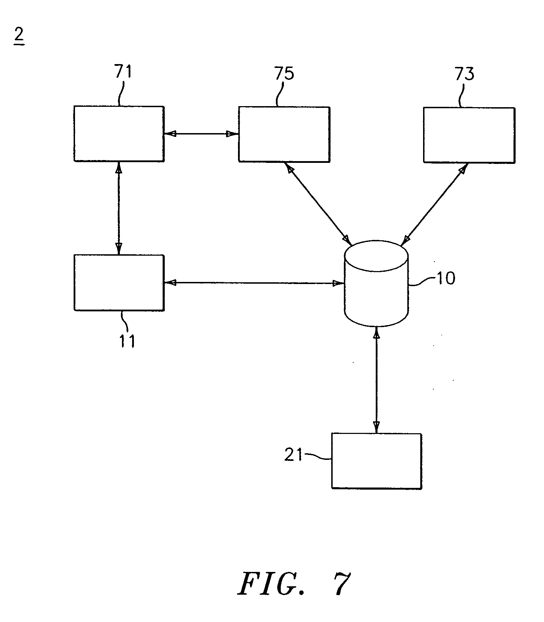

With reference to Figure 7 and in accordance with the aforementioned disclosure, a sales person 71 inputs to the EIBS 2 using the Slotting Plan 11. Slotting Plan 11 inputs build the Skyline 21 and are stored in central data repository 10. Meetings are preferably held with engine center representatives (typically sales and operations) to review forecast and input status. Requirements are firmed and booked by Master Planners 73 at which time notification is sent, preferably via email 75 to the user 71 who submitted the booking. Weekly, the system develops the Production Package. The Executive Summary, Production to Sales status, and Master Schedule is reviewed at the weekly operations review. Metrics are reviewed real time for turn around time (TAT) and contract performance.

It is apparent that there has been provided in accordance with the present invention a web-based methodology for collecting and disseminating information related to the overhaul and repair of engines and modules which fully satisfies the objects, means, and advantages set forth previously herein. While the present invention has been described in the context of specific embodiments thereof, other alternatives, modifications, and variations will become apparent to those skilled in the art having read the foregoing description. Accordingly, it is intended to embrace those alternatives, modifications, and variations as fall within the broad scope of the appended claims.

## Claims

1. A method of maintaining, repairing or overhauling a gas turbine engine or gas turbine module wherein the scheduling of the maintaining, repairing or overhauling is effected using a computer assisted method comprising the steps of:
receiving a schedule of available time slots for the operation;
submitting a reservation, said reservation identifying a plurality of said time slots suitable for said operation; and
receiving a notification, said notification either declining said reservation or accepting said reservation at one of said plurality of time slots identified in said submitting step.

2. A computer assisted method of scheduling an operation, comprising the steps of:
receiving a schedule of available time slots;
submitting a reservation, said reservation identifying a plurality of said time slots suitable for said operation; and
receiving a notification, said notification either declining said reservation or accepting said reservation at one of said plurality of time slots identified in said submitting step.

3. The method of claim 1 or 2, wherein said submitting said reservation comprises submitting said reservation for a made-to-order product.

4. The method of claim 3, wherein said submitting said reservation comprises submitting said reservation for a gas turbine engine.

5. The method of claim 3, wherein said submitting said reservation comprises submitting said reservation for a maintenance operation.

6. The method of claim 1 or 2 comprising the additional steps of reviewing said submitted reservation and deciding whether to accept or decline said submitted reservation.

7. The method of claim 6 wherein said reviewing said submitted reservation comprises reviewing said submitted reservation by a human.

8. A computer assisted method of maintaining a schedule, comprising the steps of:
providing a schedule of time slots and a status of said time slots, wherein said status is selected from the group consisting of booked, reserved, and open;
accepting a reservation for an operation, said reservation identifying a plurality of said time slots having a reserved or open status; and
adjusting a status of said time slots identified in said accepting step.

9. The method of claim 8, wherein the adjusting step comprises changing an open status to a reserved status upon reaching a selected number of reservations for said time slot.

10. The method of claim 8, wherein the adjusting step comprises changing a reserved status to a booked status upon reaching a selected number of reservations for said time slot.

11. An apparatus for performing computer assisted scheduling of an operation, comprising:
means for receiving a schedule of available time slots;
means for submitting a reservation, said reservation identifying a plurality of said time slots suitable for said operation; and
means for receiving a notification, said notification either declining said reservation or accepting said reservation at one of said plurality of time slots identified in said submitting step.

12. The apparatus of claim 11, wherein said operation is one performed upon a made-to-order product.

13. The apparatus of claim 11, wherein said operation is one performed upon a gas turbine engine.

14. The apparatus of claim 11, wherein said operation is a maintenance operation.

15. An apparatus for performing computer assisted maintenance of a schedule comprising:
means for providing a schedule of time slots and a status of said time slots, wherein said status is selected from the group consisting of booked, reserved, and open;
means for accepting a reservation for an operation, said reservation identifying a plurality of said time slots having a reserved or open status; and
means for adjusting a status of said time slots identified in said accepting step.

16. The apparatus of claim 15, wherein an open status is adapted to change to a reserved status upon reaching a selected number of reservations for said time slot.

17. The apparatus of claim 15, wherein a reserved status is adapted to change to a booked status upon reaching a selected number of reservations for said time slot.

18. A computer assisted method of scheduling an operation, comprising the steps of:
providing a schedule of available time slots;
receiving a reservation, said reservation identifying at least one time slot suitable for said operation; and
providing a notification, said notification either declining said reservation or accepting said reservation at one of said at least one time slot identified in said submitting step.

19. An apparatus for performing computer assisted scheduling of an operation, comprising:
means for providing a schedule of available time slots;
means for receiving a reservation, said reservation identifying at least one time slot suitable for said operation; and
means for providing a notification, said notification either declining said reservation or accepting said reservation at one of said at least one time slot identified in said submitting step.

20. A method of maintaining, repairing or overhauling a gas turbine engine or gas turbine module wherein the scheduling of the maintaining, repairing or overhauling is effected making use a computer assisted method or apparatus as claimed in any of claims 2 to 19.
